(19) **Europäisches Patentamt**

**European Patent Office**

**Office européen des brevets**

(11) **EP 1 247 967 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.⁷: **F02D 41/18**, F02D 13/02, F02D 41/10

(21) Anmeldenummer: **02005500.0**

(22) Anmeldetag: **11.03.2002**

(54) **Verfahren zum Bestimmen des Luftmassenstroms vom Saugrohr in den Zylinder einer Brennkraftmaschine**

Method to determine the intake air mass flow in an internal combustion engine

Méthode pour déterminer le débit massique de l'air admis dans un moteur à combustion interne

(84) Benannte Vertragsstaaten:
**DE FR GB IT**

(30) Priorität: **05.04.2001 DE 10116932**

(43) Veröffentlichungstag der Anmeldung:
**09.10.2002 Patentblatt 2002/41**

(73) Patentinhaber: **Bayerische Motoren Werke Aktiengesellschaft**
**80809 München (DE)**

(72) Erfinder: **Konrad, Heiko, Dr.**
**82065 Baierbrunn (DE)**

(56) Entgegenhaltungen:
**EP-A- 1 076 166    WO-A-99/14476**
**US-A- 5 889 205    US-A- 5 974 870**

**Beschreibung**

Die Erfindung betrifft ein Verfahren zum Bestimmen des Luftmassenstroms vom Saugrohr in den Zylinder einer Brennkraftmaschine.

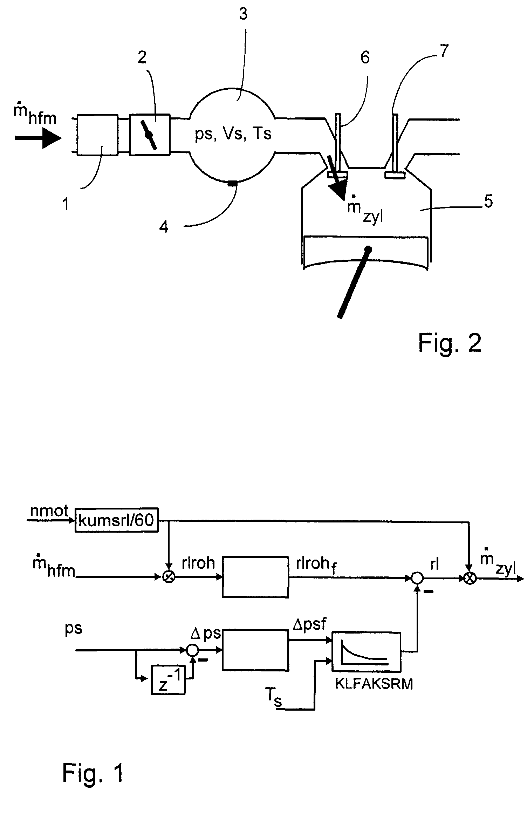

Bei luftmassengeführten Motorsteuerungssystemen mit Einzelzylinder-Einspritzung ist eine exakte Kenntnis des Luftmassenstroms (mp_zyl), der aus dem Saugrohr (3) in die bzw. den jeweiligen Zylinder (5) strömt, erforderlich. Diese Größe ist üblicherweise nicht direkt messbar. Stattdessen erfolgt eine Messung des Luftmassenstroms (mp_HFM) mit einer Messvorrichtung (1), die stromaufwärts des Saugrohrs (3) und der Drosselklappe (2) (falls vorhanden) angeordnet ist (vgl. Fig. 2). Eine derartige Messvorrichtung ist z.B. ein Heißfilm-Luftmassenmesser (HFM). Bei dieser Anordnung weichen der Luftmassenstrom (mp_zyl) in den Zylinder und der stromaufwärts des Saugrohrs gemessene Luftmassenstrom (mp_hfm) bei dynamischen Laständerungen aufgrund von Befüll- und Entleervorgängen des Saugrohrs voneinander ab. Um eine ungenaue Gemischvorsteuerung zu vermeiden, müssen diese Abweichungen korrigiert werden.

In der WO-9632579 A1 ist eine Korrekturmaßnahme beschrieben, in dem unter Verwendung eines physikalischen Modells die Befüll- und Entleervorgänge im Saugrohr simuliert werden. Diesem Modell liegen die folgenden vereinfachenden Annahmen zugrunde, die für gedrosselte Ottomotoren immer gültig sind:

1. Am Ende des Zylinder-Befüllvorgangs ist ein Druckausgleich zwischen Saugrohr und Zylinder eingetreten. Der Zylinderdruck ist dann also gleich dem Saugrohrdruck.
2. Der Einlassprozess wird nicht durch vorzeitiges Schließen der Einlassventile beendet, d.h. Luft strömt über den gesamten Kolben-Hub ein.

Diese Annahmen erlauben es, den Saugrohrdruck zu schätzen, welcher nach Differentiation für die Berechnung des Luftmassenstroms in den Zylinder benötigt wird.

Ein ähnliches Verfahren ist aus der DE 197 40 914 A1 bekannt. Auch hier wird der Luftmassenstrom in den Zylinder (mp_zyl) über einen geschätzten Saugrohrdruck berechnet. Der Zusammenhang zwischen dem stromaufwärts des Saugrohrs gemessenen Luftmassenstrom (mp_hfm) und dem Luftmassenstrom in den Zylinder (mp_zyl) hat hier PT1-Verhalten.

Die beiden beschriebenen Verfahren gelten nur für Motoren, bei denen die Laststeuerung ausschließlich über die Drosselklappe erfolgt. Für Motoren, bei denen die Laststeuerung entweder ausschließlich über die Ein- und Auslassventile (drosselfrei) oder über eine Kombination von Drosselklappe und Ein- und Auslassventilen (nahezu drosselfrei) erfolgt, gelten die erwähnten vereinfachenden Annahmen nicht mehr:

1. Die Einlassventile können für die Laststeuerung früher geschlossen, d.h. es wird ggf. nicht mehr über den gesamten Kolben-Hub angesaugt.
2. Bei Motoren mit variablem Einlassventilhub können zudem sehr kleine Ventilöffnungsquerschnitte auftreten. In diesem Fall wirken die Einlassventile wie Drosselstellen. Die Bedingung, dass sich ein Druckausgleich zwischen Zylinder und Saugrohr einstellt, ist dann nicht mehr erfüllt.

Somit ist das bisherige Rechenmodell nicht mehr anwendbar für die Berechnung des Luftmassenstroms in die Zylinder.

Es ist Aufgabe der Erfindung, ein Verfahren eingangs genannter Art für Motoren zu verbessern, bei denen die Laststeuerung entweder ausschließlich über die Ein- und Auslassventile (drosselfrei) oder über eine Kombination von Drosselklappe und Ein- und Auslassventilen (nahezu drosselfrei) erfolgt.

Diese Aufgabe wird durch die Merkmale des Patentanspruchs 1 gelöst.

Das erfindungsgemäße Verfahren bzw. die erfindungsgemäße Vorrichtung basiert ebenfalls auf einem physikalischen Modell für die Befüll- und Entleervorgänge im Saugrohr. Insbesondere wegen der bei drosselfreien bzw. nahezu drosselfreien Laststeuerung schwierigen Schätzbarkeit des Saugrohrdrucks wird im Unterschied zu dem bekannten Verfahren ein gemessenes Saugrohrdrucksignal verwendet. Hierbei kann entweder der absolute Saugrohrdruck oder ein Differenzdruck zwischen dem Saugrohrunterdruck und dem Umgebungsdruck in Verbindung mit einem Umgebungsdrucksensor gemessen werden.

Ein weiteres ähnliches Verfahren ist aus der EP1076166A bekannt. Hier wird der Luftmassenstrom in den Zylinder über einen gemessenen Saugrohrdruck und einen Saugrohrs gemessenen Luftmassenstrom berechnet. Beim Gegenstand dieses Dokuments wird insbesondere die Problematik der Luftmassenbestimmung bei Vorhandensein von im Saugrohr angeordneten Druckstufen (insbesondere Verdichter bei Dieselbrennkraftmaschinen) behandelt. Die Brennkraftmaschine ist daher im Hinblick auf die Komponenten im Saugrohr gänzlich anders aufgebaut.

In der Zeichnung ist ein Ausführungsbeispiel der Erfindung dargestellt. Es zeigt

Fig. 1    die Gesamtstruktur der Berechnung in einem Steuergerät,

Fig. 2    schematisch den Ansaugtrakt einer Brennkraftmaschine und

Fig. 3    typische Signalverläufe insbesondere für den Saugrohrdruck und die Füllungssignale am Luftmassensensor und im Zylinder.

Der über die Einlassventile in den bzw. in die Zylinder strömende Luftmassenstrom mp_zyl wird gemäß ff. Formel bestimmt (vgl. auch Fig. 1 ):

$$\dot{m}_{zyl} = mp\_zyl = mp\_hfm - Vs/Rl/Ts * dps/dt$$

Hierbei sind Vs das Saugrohrvolumen, Rl die allgemeine Gaskonstante und Ts die Lufttemperatur im Saugrohr 3.

Der Erfindung liegt die Erkenntnis zugrunde, dass sich ein Anstieg des Saugrohrdrucks (dps/dt > 0) ergibt, wenn dem Saugrohr 3 mehr Luftmasse zu- als abgeführt wird, d.h. mp_zyl ist kleiner als mp_hfm. Umgekehrt bedeutet ein Sinken des Saugrohrdrucks (dps/dt < 0), dass mehr Luftmasse ab- als zugeführt wird, d. h. mp_zyl ist größer als mp_hfm. Beide Effekte werden mit obiger Gleichung erfasst, d.h. wenn mp_hfm, dps/dt, Vs, Rl und Ts bekannt sind, lässt sich mp_zyl stets exakt bestimmen.

Üblicherweise werden in modernen Motorsteuerungen anstelle von Massenstromsignalen relative Füllungssignale der Zylinder verwendet, da diese proportional zu den im Zylinder erzeugten Drehmoment sind. Die Massenstromsignale mp_hfm und mp_zyl werden dazu über die Drehzahl nmot in die relativen Füllungsgrößen rlroh [%] bzw. rl [%] mit dem Umrechnungsfaktor kumsrl umgeformt:

$$rlroh = 60/kumsrl/nmot * mp\_hfm$$

$$rl = 60/kumsrl/60/nmot * mp\_zyl$$

Weiterhin wird die zeitliche Ableitung dps/dt über die Drehzahl nmot in eine Ableitung über den Kurbelwellenwinkel phi umgerechnet:

$$dps/dt = dps/dphi * dphi/dt$$

Wegen

$$dphi/dt = 2*pi*nmot/60$$

gilt

$$dps/dt = dps/dphi * 2*pi*nmot/60$$

Bei segmentsynchroner Abtastung in der Motorsteuerung beträgt die Druck- bzw. Winkelabstand zum Abtastzeitpunkt k

$$\Delta ps (k) = ps(k) - ps (k-1)$$

$$\Delta phi (k) = phi(k) - phi (k-1) = 4*pi/Z$$

wobei Z die Anzahl der Zylinder ist. Zum Zeitpunkt k gilt dann

$$\Delta ps(k)/ \Delta phi(k) = \Delta ps(k) /(4*pi/Z)$$

Damit ergibt sich bei zeitsynchroner Abtastung nach einigen Umformungen

$$rl(k) = rlroh(k) - Vs*Z/(kumsrl*2*Rl*Ts)* \Delta ps(k)$$

Da der Faktor Vs*Z/(kumsrl*2*Rl*Ts) für einen bestimmten Motor ausschließlich von der Saugrohrlufttemperatur Ts abhängt, kann dieser Faktor in der Motorsteuerung durch eine Kennlinie KLFAKSRM ersetzt werden. Dadurch vereinfacht sich der Rechenaufwand in der Motorsteuerung erheblich. Es ergibt sich

$$rl(k) = rlroh(k) - KLFAKSRM * \Delta ps(k)$$

Die Differenzenbildung von ps kann zu einem verrauschten Signalverlauf führen. In diesem Fall ist es erforderlich eine Tiefpassfilterung zu $\Delta psf$ durchzuführen, wobei rlroh dann ebenfalls gefiltert werden muss (zu rlrohf), um den zeitlichen Bezug zu erhalten. Für das gefilterte Füllungssignal rlf ergibt sich dann

$$rlf(k) = rlrohf(k) - KLFAKSRM * \Delta psf(k)$$

Es hat sich gezeigt, dass diese Filterung mit einer geringen Zeitkonstante durchgeführt werden kann. Die durch die Filterung entstehende Phasenverschiebung ist dann nahezu vernachlässigbar. Die gewünschte Zylinderfüllung ist dann

$$rl \approx rlf$$

In Fig. 2 ist erfindungsgemäß im Unterschied zum Stand der Technik ein Saugrohrdrucksensor 4 vorgesehen. Der hier dargestellte Ausschnitt einer Brennkraftmaschine sei mit variabel steuerbaren Einlassventilen 6 und Auslassventilen 7 im Zylinder 5 ausgestattet (variabler Ventilhub sowie variable Einlass- und Auslasszeiten). Die Drosselklappe 2 kann, muss aber nicht vorhanden sein. Vorzugsweise wird über die Drosselklappe 5 als Vorsteuerorgan ein geringer nicht wirkungsgradverschlechternder Unterdruck von ca. 50 mbar für die Tankentlüftung eingestellt.

Mit dem beschriebenen Verfahren kann auch bei ungedrosselten oder nahezu ungedrosselten Motoren die Zylinderfüllung sowohl statisch als auch dynamisch exakt bestimmt werden. Gegenüber dem ursprünglichen bekannten Verfahren ist dadurch die Gemischvorsteuerung deutlich exakter möglich.

Dies gilt insbesondere dann, wenn neben dem ungedrosselten bzw. nahezu ungedrosselten Betrieb auch Betriebszustände vorgesehen sind, in denen eine noch stärkere Androsselung im Saugrohr vorgesehen ist, z.B. für Notlaufprogramme. Auch bei schnellen Lastwechseln und Wechseln zwischen ungedrosselten und gedrosselten Betriebszuständen ist dann die Erfassung der Zylinderfüllung noch sehr genau.

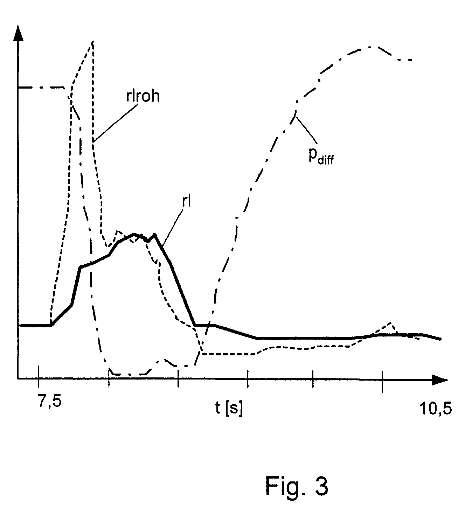

Fig.3 zeigt dazu schematisch typische Signalverläufe für den Saugrohrdruck, den (normierten) Luftmassenstrom rl in einen Zylinder und den (normierten) Luftmassenstrom rlroh im Saugrohr. Dargestellt ist dabei ein schneller Entdrosselvorgang zum Zeitpunkt t1=7.5 sec und ein schneller Androsselvorgang zum Zeitpunkt t2= 8.8 sec. Statt des Sammlerdrucks ps ist der Sammlerunterdruck $p_{diff}$=pu-ps dargestellt, wobei pu der Umgebungsdruck ist.

**Patentansprüche**

1. Verfahren zum Bestimmen des Luftmassenstroms vom Saugrohr in den Zylinder einer Brennkraftmaschine, bei der die Laststeuerung über die Ein- und Auslassventile erfolgt und wobei im Saugrohr (3) stromaufwärts zuerst ein Sensor (1) zur Messung des Luftmassenstroms und danach ein Saugrohrdrucksensor (4) angeordnet ist, bei dem der Luftmassenstrom (mp_zyl; rl) in den Zylinder (5) berechnet wird, indem vom gemessenen Luftmassenstrom (mp_hfm; rlroh bzw. rlrohf) im Saugrohr (3) die Änderungen ($\Delta$ ps bzw. $\Delta$ psf) des gemessenen Saugrohrdrucks (ps; pdiff=pu-ps), multipliziert mit einem volumen- und temperaturabhängigen Faktor (Vs/Rl/Ts; KLFAKSRM), subtrahiert werden.

**Claims**

1. A method for determining the air mass flow from the induction pipe into the cylinder of an internal-combustion engine, in which the load control takes place via the intake and exhaust valves and wherein upstream in the intake pipe (3), firstly a sensor (1) is arranged for measuring the air mass flow followed by an induction pipe pressure sensor (4), in which the air mass flow (mp_zyl; rl) into the cylinder (5) is calculated, in that the changes ($\Delta$ ps and $\Delta$psf) in the measured induction pipe pressure (ps; pdiff=pu-ps) multiplied by a volume and temperature-dependent factor (Vs/Rl/Ts; KLFAKSRM) are subtracted from the measured air mass flow (mp_hfm; rlroh and rlrohf).

**Revendications**

1. Procédé de détermination du débit massique de l'air provenant de la tubulure d'admission et arrivant dans le cylindre d'un moteur à combustion interne dans lequel le contrôle des charges s'effectue par le biais des soupapes d'admission et d'échappement et dans lequel tout d'abord un capteur (1) permettant de mesurer le débit massique de l'air puis un capteur de la pression régnant dans la tubulure d'admission (4) sont disposés en amont dans la tubulure d'admission (3), dans lequel le débit massique de l'air (mp_zyl ; rl) dans le cylindre (5) est calculé, dans le sens où les variations ($\Delta$ps ou $\Delta$psf) de la pression mesurée dans la tubulure d'admission (ps ; pdiff=pu-ps), multipliées par un facteur dépendant du volume et de la température (Vs/Rl/Ts ; KLFAKSRM), sont soustraites du débit massique de l'air mesuré (mp_hfm ; rlroh ou rlrohf) dans la tubulure d'admission (3).

Fig. 2

Fig. 1

Fig. 3